# DEMANDE DE BREVET EUROPEEN

(11) **EP 1 291 571 A1**
(43) Date de publication de la demande: **12.03.2003**
(21) Numéro de dépôt: 02356150.9
(22) Date de dépôt: 30.07.2002
(51) Int. Cl.: F16L 55/172

(54) **Dispositif de verrouillage en fermeture pour raccord de réparation**

(30) Priorité: 07.09.2001 FR 0111754
(71) Demandeur: Flowserve Polyvalves SA, 42440 Unieux (FR)
(72) Inventeur: Butigieg, Guy, 42100 Saint Etienne (FR)
(74) Mandataire: Dupuis, François

(57) **Abrégé**

Dispositif de verrouillage en fermeture pour raccord de réparation du type comprenant des mâchoires s'adaptant sur des bordures longitudinales repliées du raccord, les mâchoires étant agencées avec des doigts entre lesquels sont positionnés des éléments de boulonnage pour la fermeture et verrouillage, remarquable en ce qu'il comprend au moins un type de module (M1) support de doigts avec l'assemblage par paire de deux modules (M1) identiques montés en regard sur les bordures longitudinales du raccord de réparation en constituant une mâchoire, et en ce que chaque module (M1) présente un doigt profilé (13.2) orienté extérieurement et présentant une zone de liaison pour crantage, et une zone réceptrice complémentaire de crantage formée sur le corps du module, de manière à autoriser la liaison réciproque de deux modules (M1) disposés en paire et en regard, et en ce que chaque module comprend à ses extrémités (11.7 - 11.8) des moyens mâles-femelles permettant une liaison successive de plusieurs modules, et en ce que chaque module présente sur un côté longitudinal (11.1) une fente de positionnement et d'adaptation de la pliure en formant logement et retenue de celle-ci.

## Description

L'invention se rattache au secteur technique des conduits et canalisations réalisés à partir d'éléments tubulaires en fonte, en acier, en matière plastique, polyéthylène ou autre matière. L'invention se rattache spécifiquement aux raccords de réparation qui sont utilisés pour assurer des éléments de jonction entre conduits et canalisations en cas de détérioration, fuite ou similaire.

De manière connue, ces raccords sont réalisés à partir de tôles roulées non fermées, généralement en inox, ayant une capacité élastique de déformation radiale en ouverture, et dont les bordures d'extrémités longitudinales présentent des pliures pour permettre l'insertion d'un dispositif de fermeture du raccord. Ces raccords ont une certaine élasticité de déformation en ouverture de part leur constitution, de sorte qu'on utilise des dispositifs spécifiques à mâchoires comprenant des doigts, les dispositifs venant se monter et se clipser le long des pliures, puis par rapprochement, à l'aide d'éléments de serrage type boulons, on assure la fermeture progressive du raccord autour du conduit ou canalisation adjacente permettant d'obtenir l'étanchéité souhaitée.

Ce type de dispositif est largement exploité par le demandeur.

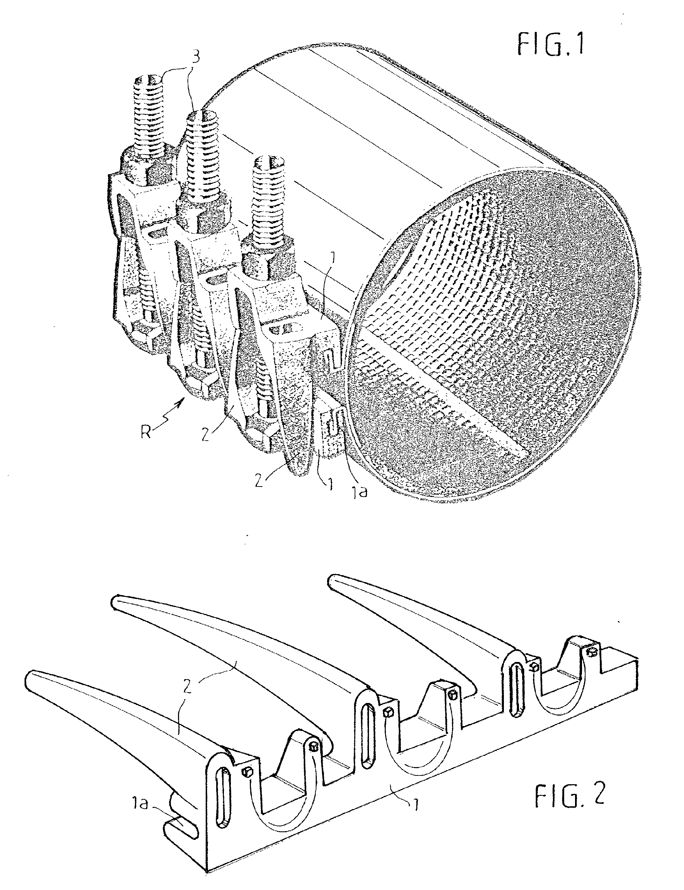

On a représenté aux figures 1 et 2 des dessins ce dispositif. Le raccord de réparation est référencé dans son ensemble par R. Le dispositif comprend des bandes supports (1) de doigts (2) disposées espacées. Ces bandes parallélépipédiques présentent intérieurement une fente longitudinale (1a) permettant l'insertion des bordures d'extrémités du raccord. Lesdites bandes sont montées en opposition sur chacune des bordures. Elles sont différentes en fonction de la réception de deux ou de trois doigts, et de la présence ou non d'éléments de maintien de boulons de liaison (3). Ces éléments de maintien permettent de retenir les boulons dans un plan perpendiculaire. En l'absence d'éléments de maintien, lesdits boulons peuvent basculer sous commande de l'utilisateur.

Ce dispositif de serrage présente néanmoins plusieurs inconvénients qui ont amené le demandeur à reconsidérer ce dernier en vue d'une optimisation.

Un premier inconvénient réside dans le fait que le dispositif à mâchoires est réalisé en fonte. Il y a donc un poids relativement conséquent qui vient s'exercer sur la zone de liaison des extrémités pliées du raccord avec risque de déformation.

Par ailleurs, ces dispositifs sont réalisés d'une manière standard avec deux ou trois doigts de serrage, de sorte que leur manipulation est peu aisée, lourde et pas toujours adaptée aux longueurs de tronçons nécessaires à la zone de réparation.

Un autre problème réside dans le fait que le dispositif à mâchoires, selon l'art antérieur, est réalisé avec des doigts de serrage qui sont disposés en alternance et en position inversée, et avec des longueurs de doigts différentes. Cela implique, en fonction du lieu d'implantation du raccord in situ, des difficultés, par moment, d'exercer le couple de serrage car il n'y a pas toujours place pour un accès aisé au boulonnage.

Un autre problème réside dans le fait que les dispositifs de serrage, selon l'art antérieur, ne sont pas modulables et adaptables aux longueurs de raccords de réparation nécessaires.

Un autre problème découle du fait que les mâchoires ne comportent pas d'éléments permettant de se conformer lors des défauts de désalignement des canalisations.

La démarche du demandeur a donc été, à partir de ce constat, de réexaminer la conception et la fabrication du dispositif de fermeture de raccord de réparation, en répondant aux objectifs recherchés de plus grande légèreté, de standardisation de fabrication, d'adaptation à la longueur réelle du raccord de réparation en fonction des besoins recherchés, d'adaptation aux efforts nécessaires de serrage du raccord par rapport aux contraintes d'effort sur le produit.

Un autre but recherché était de concevoir un dispositif de fermeture de raccord de réparation, facile à mettre en oeuvre, facile à serrer, et offrant toute sécurité dans son utilisation.

Selon une première caractéristique de l'invention, le dispositif de verrouillage en fermeture pour raccord de réparation du type comprenant des mâchoires s'adaptant sur des bordures longitudinales repliées du raccord, les mâchoires étant agencées avec des doigts entre lesquels sont positionnés des éléments de boulonnage pour la fermeture et verrouillage, ledit dispositif étant caractérisé en ce qu'il comprend au moins un type de module support de doigts avec l'assemblage par paire de deux modules identiques montés en regard sur les bordures longitudinales du raccord de réparation en constituant une mâchoire, et en ce que chaque module présente un doigt profilé orienté extérieurement et présentant une zone de liaison pour crantage, et une zone réceptrice complémentaire de crantage formée sur le corps du module, de manière à autoriser la liaison réciproque de deux modules disposés en paire et en regard, et en ce que chaque module comprend à ses extrémités des moyens mâles-femelles permettant une liaison successive de plusieurs modules, et en ce que chaque module présente sur un côté longitudinal une fente de positionnement et d'adaptation de la pliure en formant logement et retenue de celle-ci.

Selon une autre caractéristique, le dispositif comprend un second module constituant un module entretoise, et agencé à ses extrémités avec des moyens mâles-femelles identiques à ceux du premier module en permettant une liaison successive ou en intervalle avec un ou plusieurs modules de base, et en ce qu'il comprend sur son côté longitudinal une fente de positionnement et d'adaptation de la pliure des bordures en formant logement pour la retenue, la dite fente étant dans le prolongement de la fente et du logement formés sur le premier module.

Ces caractéristiques et d'autres encore ressortiront bien de la suite de la description.

L'invention est exposée ci-après plus en détail à l'aide des figures des dessins annexés dans lesquels :
- la figure 1 est une vue d'un ensemble de raccord de réparation avec dispositif de fermeture, selon l'art antérieur,
- la figure 2 est une vue en perspective de 3/4 illustrant, selon l'art antérieur, l'un des composants du dispositif, ce composant incluant des dents,

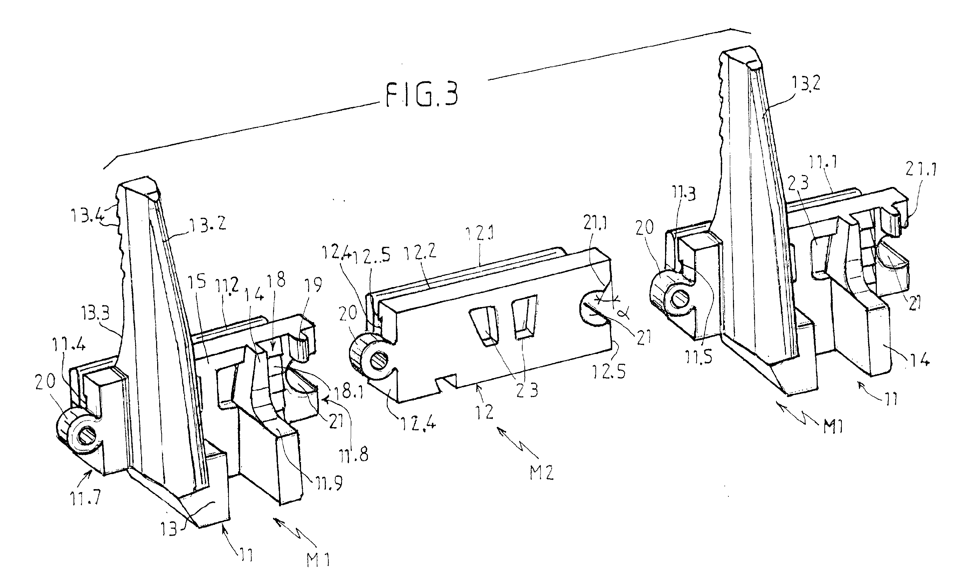

- la figure 3 est une vue en perspective du dispositif selon l'invention dans sa conception de modularité réalisée à partir, par exemple, de deux modules porteurs de dents et d'un module entretoise intégré, et ce avant assemblage.

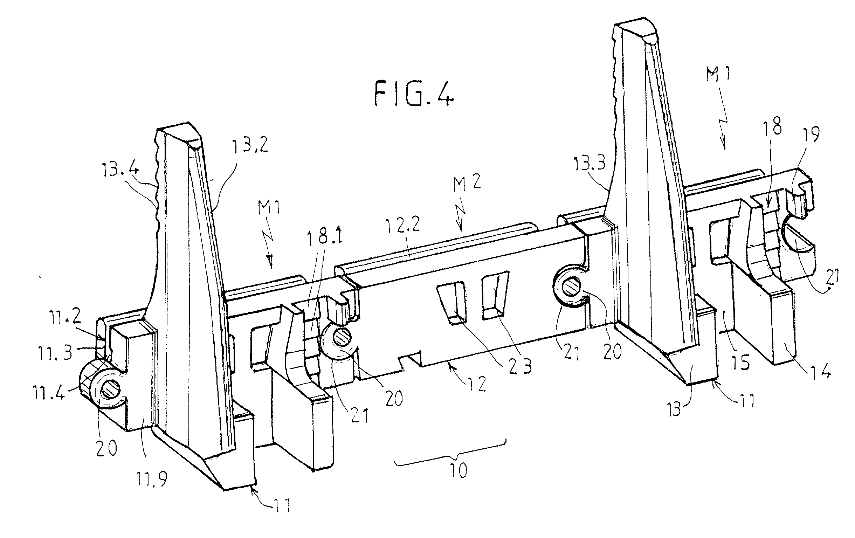

- la figure 4 est une vue en perspective selon la figure 3 après assemblage.

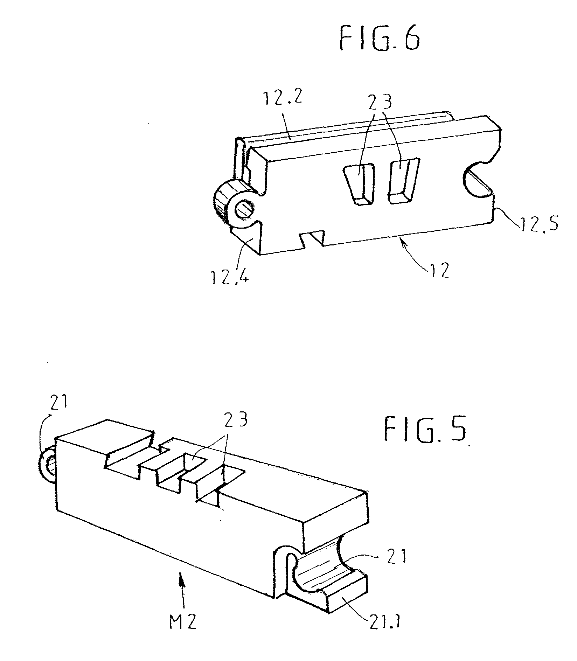

- la figure 5 est une vue partielle du module entretoise en vue de ¾,
- la figure 6 est une vue, selon la figure 5, du même module entretoise, en vue de ¾,

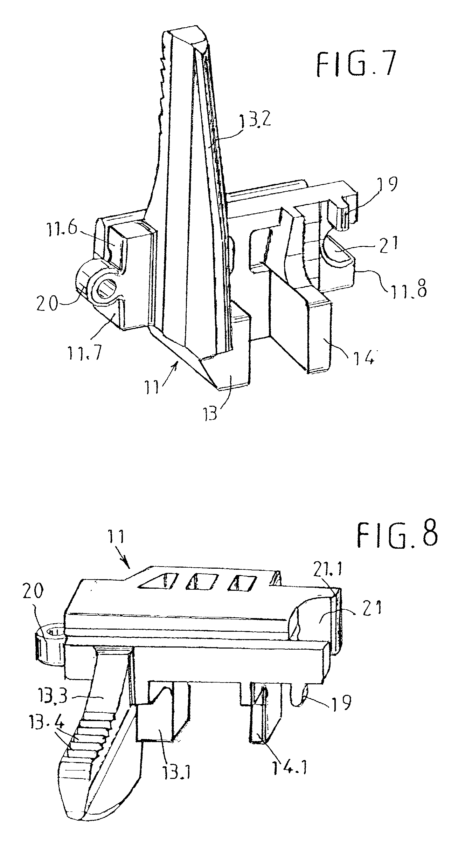

- la figure 7 est une vue en perspective dudit module porteur de dent, selon l'invention, dans une présentation de 3/4,
- la figure 8 est une vue de dessous en perspective de 3/4 dudit module, selon la figure 7,

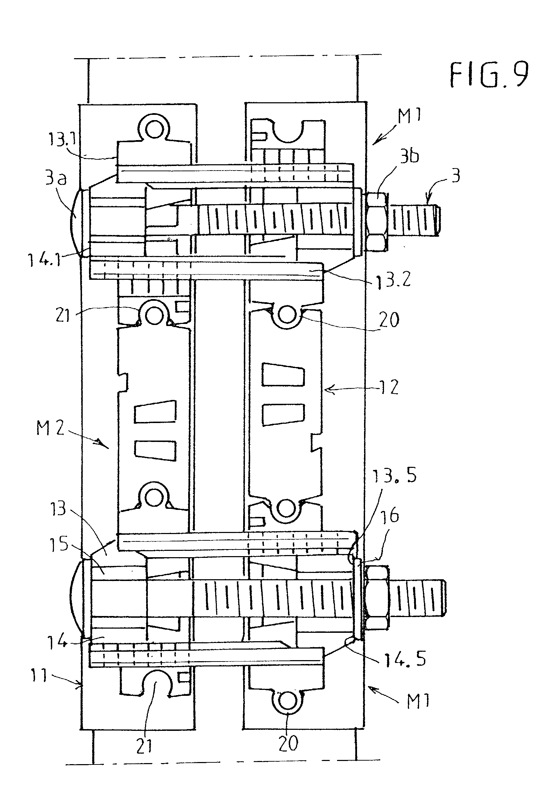

- la figure 9 est une vue en plan d'un exemple de conception et réalisation du dispositif de serrage de raccord de réparation,

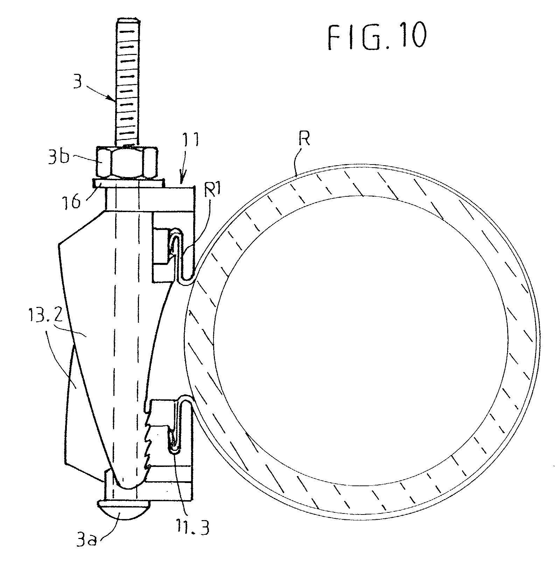

- la figure 10 est une vue de côté du dispositif, selon l'invention, en situation de serrage d'un raccord,
- la figure 11 est une vue partielle et à grande échelle de la zone de fixation des modules dans la pliure formée sur le raccord,
- la figure 12 est une vue arrière d'un module porteur de doigt, selon l'invention.

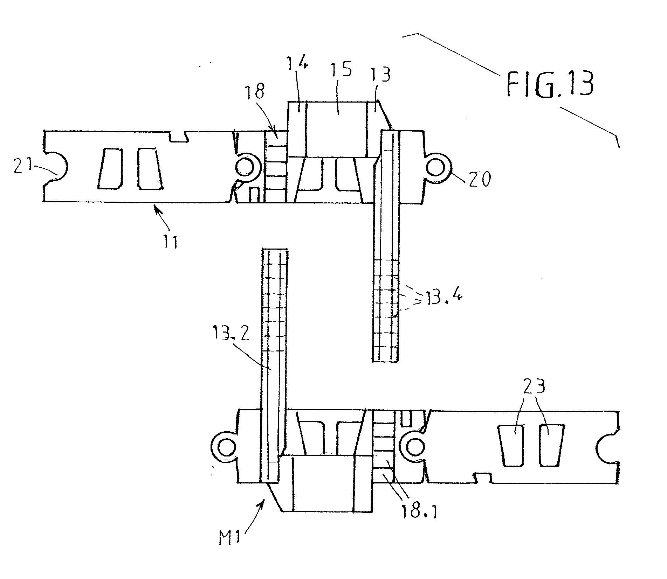

- la figure 13 est une vue en plan d'une paire de modules avant assemblage.

Afin de rendre plus concret l'objet de l'invention, on le décrit maintenant d'une manière non limitative illustrée aux figures des dessins.

Le dispositif de serrage de raccord de réparation (R) est référencé dans son ensemble par (10). Il comprend deux types de modules (M1 ― M2) qui sont susceptibles d'être assemblés les uns aux autres pour constituer, selon une longueur déterminée, ledit dispositif, avec des modules supports de doigts et permettant le positionnement des boulons de serrage du type précité, avec ou non un ou des modules entretoises intermédiaires.

Les différents modules sont avantageusement réalisés en une matière plastique hautement chargée lui permettant de répondre aux critères de légèreté mais aussi de solidité pour tenir compte des contraintes et forces extérieures dans les applications considérées.

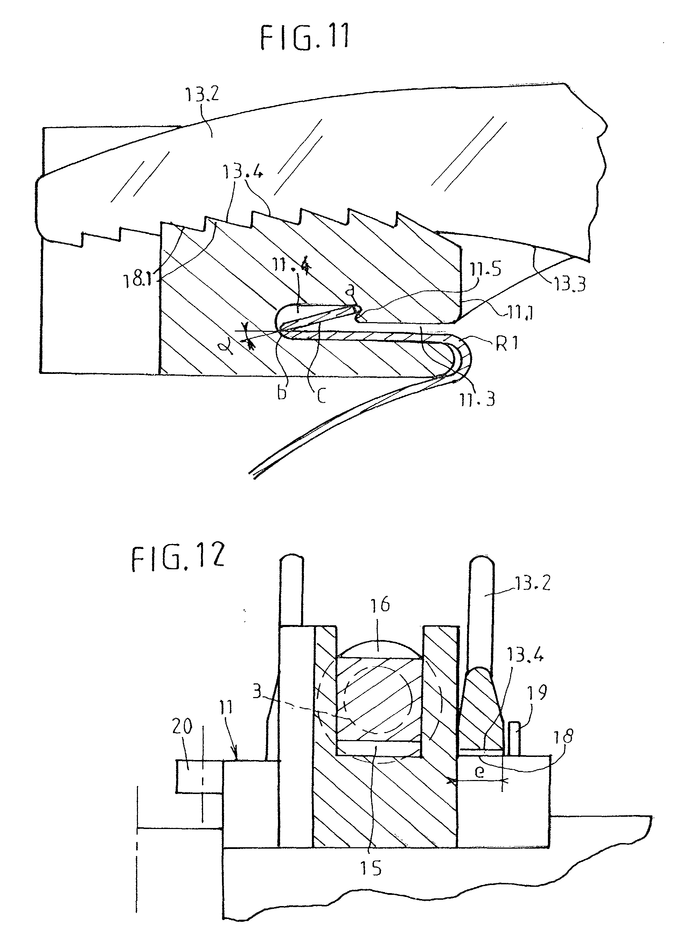

Les deux types de modules (M1 ― M2) sont destinés à être positionnés autour de la zone de pliure longitudinale formée à chaque bordure d'extrémité longitudinale du raccord de réparation, et ce afin de les rapprocher par déformation élastique du raccord. Pour ce faire, chaque module (M1 ― M2) qui est établi sous forme d'un corps (11 ― 12) parallélépipédique présente, sur un côté longitudinal (11.1 ― 12.1), une fente (11.2 ― 12.2) de positionnement et d'adaptation de la pliure en formant logement pour celle-ci. D'une manière spécifique, ledit logement ainsi réalisé (11.3 ― 12.3) présente, à partir de la zone d'introduction, une empreinte profonde et plus large (11.4 ― 12.4) susceptible d'autoriser la réception de la partie coudée (R1) de la zone de pliure et son maintien. Plus spécifiquement, une encoche (11.5 ― 12.5) oblique forme bec de retenue en étant disposée en sens inverse de la zone d'introduction de la pliure en assurant son maintien. Cette encoche permet comme représenté figure 11 un léger écartement selon un angle α de l'extrémité de la pliure déformant ainsi deux points de butée a, b, avec un pli « C » de ladite extrémité. Cela permet un arc-boutement de la zone pliée et une meilleure tenue de l'ensemble.

Le premier module (M1) est ainsi agencé avec deux pattes (13 ― 14) formées monobloc, laissant libre un passage (15) pour l'introduction et positionnement d'un boulon de serrage (3). La tête (3a) du boulon de serrage et l'écrou (3b) sont susceptibles de venir en appui sur les chants extérieurs (13.1 ― 14.1) verticaux desdites pattes (13 ― 14). En variante, et de préférence, un évidement (13.5- 14.5) est formé sur la face apparente des pattes (13 - 14) pour assurer le centrage et positionnement d'une ou de plusieurs rondelles (16) d'appui du boulon et de l'écrou.

Selon une autre disposition, la première patte (13) présente, latéralement et en prolongement, une forme méplate formant doigt (13.2) et ayant une configuration extérieure curviligne. Cette forme en doigt prend appui sur la base supérieure (11.9) du corps (11), et sur une partie (11.1) du chant présentant la fente de positionnement du raccord.

Ainsi, ledit doigt offre une grande solidité, de par son positionnement sur deux plans d'appui, l'un supérieur et l'autre sur le chant arrière précité.

Selon une autre disposition, la face intérieure (13.3) du doigt (13.2) est également curviligne dans une orientation sensiblement différente de son chant extérieur, et présente une zone de liaison par crantage (13.4) à pans inclinés. L'orientation des pans se trouve être en regard du corps (11) du module (M1).

Située adjacente à l'autre patte (14), est formée une zone d'ancrage complémentaire (18) sur la base apparente supérieure (11.9) du corps (11). Lesdits crans (18.1) ont la même configuration et la même dimension que ceux formés sur la partie doigt précitée. Leur orientation est établie vers l'avant du corps , et dans le même sens que ceux formés sur le doigt du même module. Avantageusement, cette zone d'ancrage (18) présente un profil identique et complémentaire à celui de la face intérieure (13.3) du doigt pour permettre le rapprochement maximum des deux modules (M1) en opposition et serrage.

Une petite patte (19) en saillie disposée près des crans (18.1) est conformée sur le corps précité afin de définir un espace (e) et une butée par rapport à la patte adjacente (14) et aux crans (18.1) situés dans la zone médiane.

Cette disposition permet un montage de deux modules (M1) du type précité en opposition pour former une mâchoire, de sorte que chaque forme en doigt est susceptible, dans sa partie crantée, de s'ajuster sur la partie crantée formée sur le corps du module opposé, ladite petite patte (19) assurant un contrôle du débattement latéral.

Selon une autre disposition, ledit module (11) porteur de doigt comprend, à chacune de ses extrémités (11.7 ― 11.8), des moyens mâle (20)-femelle (21) permettant une liaison successive de plusieurs modules du même type (M1) ou module entretoise (M2). Ces moyens de liaison sont, par exemple, une forme en anneau (20) disposée à une première extrémité (11.7), côté doigt par exemple, et en débordement extérieur, et une forme en découpe (21) réalisée intérieurement dans le corps (11) dudit module (M1). Cette découpe (21) est débouchante pour permettre le positionnement et l'articulation de l'anneau (20), ainsi que son pivotement angulaire α, selon une amplitude de quelques degrés. Ledit anneau (20) est établi sur une partie seulement de l'épaisseur du corps du module (M1) pour ne pas déborder dans la zone de logement des pré-pliures du raccord. Ladite découpe (21) est établie sur tout ou partie de l'épaisseur du corps mais sa partie active est établie jusqu'à venir tangenter la zone de logement de la pliure précitée.

D'une manière avantageuse, la zone de découpe (21) présente une partie chanfreinée (21.1) permettant le libre passage de l'anneau (20) et son introduction dans la découpe.

Les chants latéraux (11.6 ― 11.7) formés sur le corps (11) côté anneau et côté découpe sont sensiblement en oblique pour permettre un certain débattement et jeu dans l'articulation de deux modules assemblés consécutivement. Les modules (M1) peuvent présenter par ailleurs des cavités (23) ou zones d'allégement appropriées sans nuire à leur solidité.

Le second module (M2) constitue un module entretoise. Il est établi sous forme d'un corps (12) parallélépipédique d'une longueur donnée avec toujours la fente (12.2) et empreinte (12.3) profonde permettant le logement de la partie pliée du raccord, et également sur chacun des chants transversaux (12.4 ― 12.5), les moyens de liaison (20 ― 21), d'emboîtement mâle-femelle, du type précité, à savoir l'anneau (20) et la découpe (21). Ledit module (12) entretoise présente aussi des zones d'allégement (23).

Ainsi, selon l'invention, le dispositif de serrage de raccord comprend une pluralité de modules porteurs de doigt (M1) tous identiques et pouvant être positionnés à partir de l'une des bordures longitudinales pliées du raccord. Une paire de modules (M1) du dispositif de serrage comprend ainsi un module disposé à partir de chaque bordure de pliage et les doigts respectifs des modules (M1) en regard viennent permettre l'accouplement desdits modules (M1) à la manière d'une mâchoire, et ce à l'aide des éléments crantés formés sur la partie inférieure des doigts et sur le corps du module proprement dit.

En fonction des efforts nécessaires et sollicitations du raccord, l'utilisateur peut disposer sur ledit raccord plusieurs paires de modules en les accouplant les unes aux autres par l'emboîtement spécifique des parties mâle et femelle correspondantes de liaison. On peut ainsi obtenir un dispositif comprenant deux paires de modules (M1), donc à quatre dents, ou trois paires de modules (M1) consécutifs à six dents, ou autres. On peut aussi, selon l'invention, grâce au module entretoise (M2), écarter deux modules (M1) à doigts consécutifs en introduisant alors le module entretoise dans les formes complémentaires mâle-femelle réceptrices des modules porteurs de doigt.

Ainsi, et selon l'invention, on utilise en pratique deux types de modules identiques, l'un porteur de doigt(s), l'autre entretoise, qu'il suffit d'assembler à la manière d'un jeu de construction. Les modules porteurs de doigt(s) sont tous identiques les uns aux autres et ils peuvent donc s'adapter sur le raccord à partir de l'une des deux extrémités longitudinales des bordures pliées du raccord. On conçoit ainsi que le montage est rapide, facile à exécuter.

Un autre avantage, selon l'invention, réside dans le fait que les couples de modules porteurs de doigt(s) s'auto-positionnent et se maintiennent par le biais des parties crantées formées sur les doigts et corps de modules correspondants avec une position en inversion. On obtient ainsi une ou plusieurs mâchoires avec un auto-verrouillage immédiat après pré-accouplement des modules opposés (M1) entre eux. Ainsi, lorsque le raccord, qui a une capacité naturelle de déformation élastique en ouverture, reçoit un couple de modules support de doigt, la liaison et assemblage des modules (M1) permet un positionnement immédiat et durable de l'ensemble par le fait de retenue du aux crantages. L'opérateur peut alors, sans aucune difficulté, en ayant les mains libres, positionner les boulons de blocage (3) et de serrage dans les formes réceptrices correspondantes. Le serrage des boulons permet le rapprochement des modules porteurs de doigt et le passage successif d'un ou de plusieurs crans. On obtient ainsi une sécurité complémentaire dans la liaison. La tête du boulon de serrage peut être positionnée à l'endroit le plus approprié pour assurer la fermeture définitive. La longueur des modules entretoises peut être établie de toute manière appropriée en fonction des besoins.

Les avantages ressortent bien de l'invention. On souligne la nouvelle conception du dispositif de serrage des raccords, la modularité de ses composants, son adaptation aisée, sa légèreté. On souligne également la possibilité d'adaptation d'un nombre de mâchoires avec un ou plusieurs modules (M1) en fonction des besoins et des contraintes.

## Revendications

1. Dispositif de verrouillage en fermeture pour raccord de réparation du type comprenant des mâchoires s'adaptant sur des bordures longitudinales repliées du raccord, les mâchoires étant agencées avec des doigts entre lesquels sont positionnés des éléments de boulonnage pour la fermeture et verrouillage, ledit dispositif étant **caractérisé en ce qu'**il comprend au moins un type de module (M1) support de doigts avec l'assemblage par paire de deux modules (M1) identiques montés en regard sur les bordures longitudinales du raccord de réparation en constituant une mâchoire,
et **en ce que** chaque module (M1) présente un doigt profilé (13.2) orienté extérieurement et présentant une zone de liaison pour crantage, et une zone réceptrice complémentaire de crantage formée sur le corps du module, de manière à autoriser la liaison réciproque de deux modules (M1) disposés en paire et en regard,
et **en ce que** chaque module comprend à ses extrémités (11.7 ― 11.8) des moyens mâles-femelles permettant une liaison successive de plusieurs modules,
et **en ce que** chaque module présente sur un côté longitudinal (11.1) une fente de positionnement et d'adaptation de la pliure en formant logement et retenue de celle-ci.

2. Dispositif selon la revendication 1, **caractérisé en ce qu'**il comprend un second module (M2) constituant un module entretoise, et agencé à ses extrémités avec des moyens mâles-femelles identiques à ceux du premier module (M1) cn permettant une liaison successive ou en intervalle avec un ou plusieurs modules de base, et **en ce qu'**il comprend sur son côté longitudinal une fente (12.2) de positionnement et d'adaptation de la pliure des bordures en formant logement pour la retenue, la dite fente étant dans le prolongement de la fente et du logement formés sur le premier module (M1).

3. Dispositif selon l'une quelconque des revendications 1 et 2, **caractérisé en ce que** le logement formé (11.3 ― 12.3) sur les modules (M1-M2) présente une empreinte profonde plus large (11.4 ― 12.4) susceptible d'autoriser la réception de la partie pliée de la zone de pliure avec un effet de pli et son maintien, avec une encoche (11.5 ― 12.5) formant bec de retenue, ladite partie pliée étant maintenue en deux points de butée.

4. Dispositif selon la revendication 1, **caractérisé en ce que** le module (M1) est agencé avec deux pattes (13 ― 14) formées monobloc, laissant libre un passage (15) pour l'introduction et positionnement d'un boulon de serrage (3), et **en ce que** la tête (3a) du boulon de serrage et l'écrou (3b) est en appui sur les chants extérieurs (13.1 ― 14.1) verticaux desdites pattes (13 - 14).

5. Dispositif selon la revendication 4, **caractérisé en ce que** un évidement (13.5 ― 14.5) est formé sur la face apparente des pattes (13 - 14) pour assurer le centrage et positionnement d'une ou de plusieurs rondelles (16) d'appui du boulon et de l'écrou.

6. Dispositif selon la revendication 4, **caractérisé en ce que** la première patte (13) présente, latéralement et en prolongement, une forme méplate formant doigt (13.2) et ayant une configuration extérieure curviligne, ladite forme en doigt prenant appui sur la base supérieure (11.1) du corps (11), et sur une partie (11.2) du chant présentant la fente de positionnement du raccord.

7. Dispositif selon la revendication 6, **caractérisé en ce que** la face intérieure (13.3) du doigt (13.2) est curviligne dans une orientation sensiblement différente de son chant extérieur, et présente une zone de liaison par crantage (13.4) à pans inclinés, l'orientation des pans se trouvant être en regard du corps (11) du module (M1).

8. Dispositif selon la revendication 6, **caractérisé en ce que** située adjacente à l'autre patte (12), est formée une zone d'ancrage complémentaire (18) sur la partie apparente supérieure (11.2) du corps (11), lesdits crans (18.1) ayant la même configuration et la même dimension que ceux formés sur la partie doigt précitée, et **en ce que** leur orientation est établie vers l'avant du corps, et dans le même sens que ceux formés sur le doigt du même module.

9. Dispositif selon la revendication 8, **caractérisé en ce qu'**une petite patte (19) en saillie disposée près des crans (18.1) est conformée sur le corps précité afin de définir un espace (e) et une butée par rapport à la patte adjacente (12) et aux crans (18.1) situés dans la zone médiane.

10. Dispositif selon les revendications 1 et 2, **caractérisé en ce que** le module (11) porteur de doigt comprend, à chacune de ses extrémités (11.7 ― 11.8), des moyens mâle (20)-femelle (21) permettant une liaison successive de plusieurs modules du même type (M1) ou module entretoise (M2), ces moyens de liaison étant une forme en anneau (20) disposée à une première extrémité (11.7), côté doigt, et en débordement extérieur, et une forme en découpe (21) réalisée intérieurement dans le corps (11) dudit module (M1), cette découpe (21) étant débouchante pour permettre le positionnement et l'articulation de l'anneau (20), ainsi que son pivotement angulaire α, selon une amplitude de quelques degrés.

11. Dispositif selon la revendication 10, **caractérisé en ce que** la zone de découpe (21) présente une partie chanfreinée (21.1) permettant le libre passage de l'anneau (20) et son introduction dans la découpe.

12. Dispositif selon la revendication 6, **caractérisé en ce que** les chants latéraux (11.6 ― 11.7) formés sur le corps (11) côté anneau et côté découpe sont sensiblement en oblique pour permettre un certain débattement et jeu dans l'articulation de deux modules assemblés consécutivement.
